# EUROPEAN PATENT SPECIFICATION

(11) **EP 1 135 638 B1**
(45) Date of publication and mention of the grant of the patent: **17.12.2003**
(21) Application number: 99973321.5
(22) Date of filing: 22.11.1999
(51) Int. Cl.: F16H 63/42

(54) **METHOD AND APPARATUS FOR A GEARBOX**
VERFAHREN UND EINRICHTUNG FÜR EIN GETRIEBE
PROCEDE ET APPAREIL POUR BOITES DE VITESSES

(30) Priority: 26.11.1998 SE 9804053
(43) Date of publication of application: 26.09.2001
(73) Proprietor: Scania CV Aktiebolag (publ), 151 87 Södertälje (SE)
(72) Inventor: SÖDERMAN, Göran, S-151 46 Södertälje (SE)
(74) Representative: Waldebäck, Hans Olov
(86) International application number: SE9902139
(87) International publication number: WO00034693

(56) References cited:
- WO-A1-98/27369
- GB-A- 2 214 580
- US-A- 4 320 381

## Description

### TECHNICAL FIELD

This invention relates to a method and an arrangement in an electronically controlled mechanical multi-step gearbox in accordance with the preamble to patent claims 1 and 3 respectively.

### STATE OF THE ART

In a gearbox according to an example of the state of the art which is controlled by an electrical system with servo devices, the control system is provided, at the time of a gear change operation, with detailed information from the various gear change steps with regard to the successful completion of synchronisation. The driver is thus made aware that the gear change operation has been completed, i.e. that the gear selected is engaged and that the clutch, disengaged during the gear change phase, can therefore be re-engaged between the engine and the gearbox. In practice, this is achieved, according to the example of the state of the art, by means of contact sensors or electronic sensors designed to detect the physical movement of each gear carrier supporting a gear shift fork. In this context, a certain amount of movement corresponds to the synchronising process having been carried out. In addition, a speed sensor on the gearbox output shaft is designed to provide information on the vehicle's speed. All in all, this means that a large number of sensors are needed for being able to ascertain satisfactorily whether the synchronising process has been completed and whether a certain gear is engaged.

US, A, 4 320 381 describes an indicator for facilitating the driver to select correct gear in a gearbox having speed sensors on both the input shaft and the output shaft. In this case the speed sensor tells the driver about the speeds of these shaft, but it will not give him any indication if a gear change operation is finished or not, and neither will it indicate to him if he can engage the clutch or not.

### PROBLEMS WITH THE STATE OF THE ART

In the case of a gearbox for heavy vehicles, including, for example, not only a main gearbox with three gear change steps but also a two-step so-called split gearbox and a two-step so-called range gearbox, the state of the art requires at least eight different sensors to provide sufficient information to the control system. This entails susceptibility to malfunctions of the actual sensors and of the system as a whole, and also problems of access for possible replacement and testing, resulting in expensive servicing. The

presence of a number of sensors, which have to be situated at different points in the gearbox and be connected to the control system also, entails an inherently expensive design. Corresponding problems also occur in an application with only a main gearbox.

### OBJECT AND MOST IMPORTANT CHARACTERISTICS OF THE INVENTION

One object of the present invention is to eliminate the problems associated with the state of the art and to indicate a more robust and more economic solution.

This is achieved with a method and an arrangement of the kind mentioned in the introduction by means of the features in the characterising part of patent claims 1 and 3 respectively.

The result is simple and inexpensive equipment which will also be more reliable because of radical reduction in the number of components involved, since the invention not only requires the use of only two sensors but also allows the use of sensors whose structure is robust and reliable.

In practice, the memory of the control unit is primed with the gear change ratios within each step of the main gearbox and any split gearbox and range gearbox incorporated. In the case of a composite gearbox comprising a main gear box and in addition a split and/or range gearbox, the gear change ratios at the various steps are selected so that all the possible gear combinations result in a unique speed ratio between the input shaft and the output shaft. Confusion between different gear change states is thus avoided.

As such ratios between the input and output speeds unambiguously represent the gear position situation prevailing in the gearbox, the control unit can therefore indicate gear changes taking place not only in the main gearbox but also in any split gearbox and/or range gearbox incorporated. The control unit thus receives via a minimum number of sensors the required information on the gear change situation prevailing in each portion of the gearbox, which means that the control unit can use correct information for responding at the time of the next gear change operation.

The features of the invention result in a signal which can be used as information for the driver as to whether he can release the clutch or engage an automatic clutch to take care of corresponding procedures. The system can also be used for applications employing more far-reaching automated control, e.g. with interruption of the driveline without the disc clutch being disconnected, as in systems operating with engine speed adjustment.

### BRIEF DESCRIPTION OF THE DRAWINGS

The invention will now be described in more detail on the basis of an embodiment and with reference to the attached drawings, in which:
Fig. 1 depicts a gearbox with an arrangement according to the invention, and
Fig. 2 is a flow diagram of an indicating sequence according to the invention

### BRIEF DESCRIPTION OF AN EMBODIMENT .

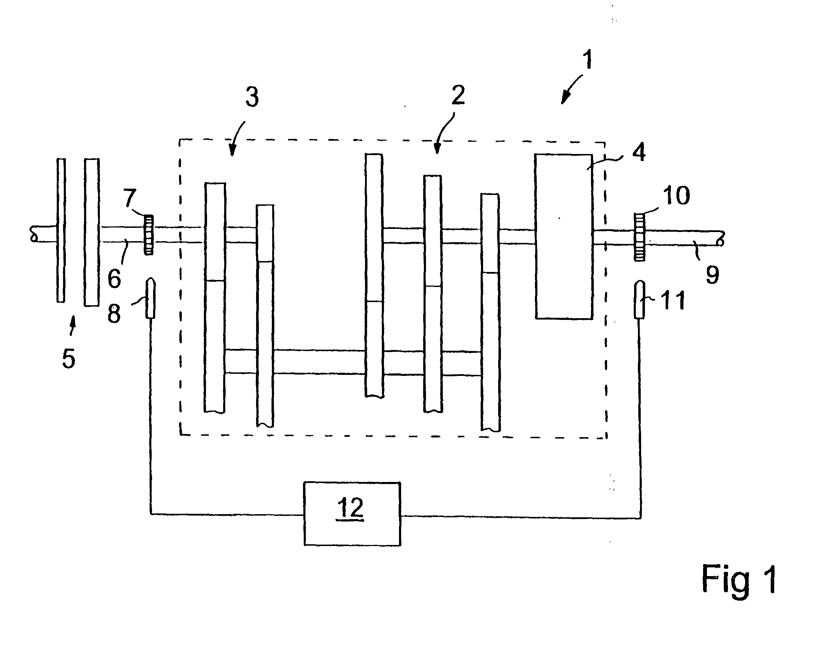

In Fig. 1, reference 1 denotes a gearbox accommodated in a housing and comprising a three-step main gearbox 2, a two-step split gearbox 3 and a range gearbox 4 in the form of a two-step planetary gear (not shown in detail). For the sake of simplicity, gear carriers, gear shift forks, synchronising cones, synchronising rings etc. have been omitted. The gearbox 1 is intended for a heavy-duty vehicle, such as a truck or a bus.

On the left side of the drawing, reference 5 denotes a clutch, one half of which is connected for joint rotation to the input shaft 6 to the gearbox 1. The other half of the clutch is connected in a conventional manner (not depicted) to the vehicle's engine. The input shaft 6 is provided with a first speed sensor which in this case consists of a first gearwheel 7 cooperating with a first sensor 8 which may be an inductive sensor, a Hall sensor or some other suitable kind of conventional sensor. The output signal from the sensor 8 is typically a square signal which represents the speed of the associated shaft 6, although other signal shapes may occur depending on the sensor adopted. A second gearwheel 10 which cooperates with a second sensor 11 in the same manner as in the case of the input shaft is arranged on the gearbox output shaft 9 which is connected in a conventional manner (not depicted) to the vehicle's driving wheels. The outputs from the sensors are carried to a control unit 12 in which the signals received are processed and which is designed to emit an output signal for the system.

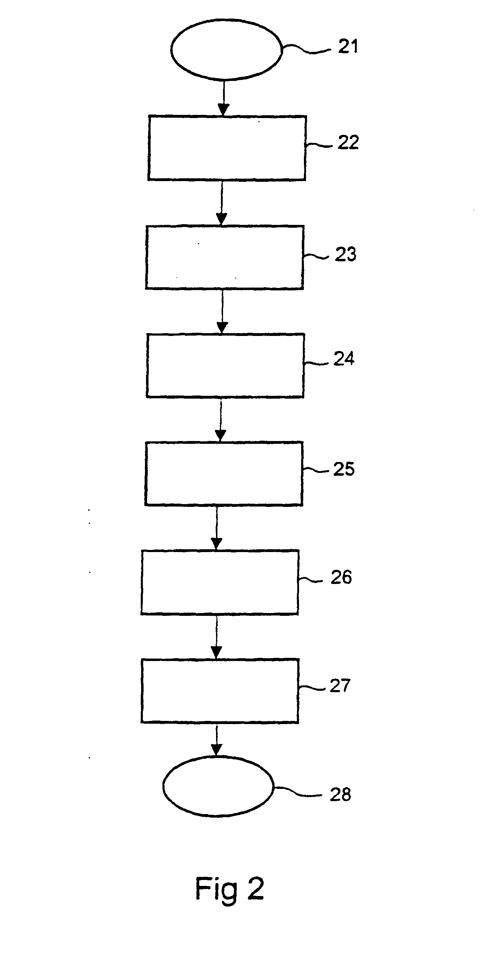

In the flow diagram in Fig. 2, reference 21 denotes the initiation of an indicating sequence, followed at 22 by the speed of the input shaft being detected to enable a first speed signal to be generated at 23. The speed of the output shaft is detected at 24 and a corresponding second speed signal is generated at 25. The extraction from a memory of data appropriate to the speed signals takes place at 26 and the system's output signal as above is generated at 27. Reference 28 denotes the end of the sequence.

Particularly in heavy vehicles which have electronically controlled mechanical multi-step gearboxes, it is of great importance that the driver and any automatic clutch system incorporated receive an indication that the synchronising process has been completed during a gear change operation as exactly and quickly as possible so that the disc clutch or equivalent can be re-engaged and the engine thereby be reconnected to the driving wheels without delay. The reason for this is the desire in many situations to minimise the state in which the engine is not connected to the driving wheels.

According to the invention, the input and output speeds are thus compared to determine whether the gear change operation and hence the synchronising process have been completed. When the ratio between these speeds has been constant for a prescribed period of time, the control system finds that the synchronisation has been successfully completed, which is followed, in the case of a manual clutch, by the driver receiving information that the gear is engaged so that he can thereafter immediately release the clutch pedal and continue driving the vehicle. In the case of an automatic clutch, the corresponding signal is conveyed to the clutch release mechanism. The length of the time interval adopted may vary according to the application and depends, for example, on the size of the gearbox and of the masses expected to be involved in the synchronising process. It is advantageous to carry out empirical testing of said period of time for the particular case. In the unusual case of synchronisation not yet being completed despite the speed ratio having been constant for the prescribed period of time, the control unit does in principle receive signals concerning this situation immediately after the driver has released the clutch. In this situation, a new synchronising process commences.

In a further modification of the invention, the control system ascertains successful completion of synchronisation by analysing the change in the speed ratio during the synchronising process. In this respect the control system is designed so that when the ratio has reached or substantially reached a certain constant value, the control system decides, on the basis of ratio change characteristics, whether that value corresponds to correctly performed synchronisation, e.g. depending on the rate at which the ratio approaches said value.

The invention may be varied within the scope of the attached patent claims and is for example also applicable to other gearboxes in which a synchronising process takes place, including, for example, mechanical gearboxes with only three or four steps, gearboxes incorporating a main gearbox and a split gearbox and gearboxes incorporating a main gearbox and a range gearbox.

The invention provides the possibility of controlling gear changes by means of a lever in the form of a joystick, which may therefore simulate the gear lever of a mechanically operated gearbox. Other ways of accomplishing this control may also occur.

The invention is also extremely applicable in cases where the gear change operation is preceded by control of engine speed, or generally where drive power interruption in the driveline occurs, as in systems employing far-reaching automation, e.g. in gear change operations performed without releasing the disc clutch.

An example which may be mentioned of a gearbox of the kind depicted in the drawings comprises twelve permissible forward gears and two reverse gears, which suggests that gear change activity is extensive in varied driving conditions. In such cases, moreover, the total gear ratio is 1:16 in the lowest gear and 1:1 in the highest gear.

The invention is applicable to sequential gears in which gear change instructions upwards or downwards in sequence are given by the driver by means of corresponding forward and rearward movements respectively of, for example, a lever.

## Claims

1. Method in an electronically controlled mechanical multi-step gearbox (1), whereby the speed of the input shaft (1) to the gearbox (6) is detected by a first sensor (7,8) for generation of a first speed signal and the speed of the output shaft (9) from the gearbox (1) is detected by a second sensor (10,11) for generation of a second speed signal, said speed signals from the sensors (7,8;10,11) are conveyed to a control unit (12), which is designed on the basis of these speed signals and with the assistance of data stored in a memory which concern the gear change ratios of the gearbox (1) to perform an analysis of the gear position situation prevailing in the gearbox (1) during a gear change operation, **characterised in that** the speed signals are compared and that when the ratio between them has been found to be constant for a predetermined period of time at the end of the gear change operation the control unit (12) emits an output signal indicating the completion of the gear change operation.

2. Method according to claim 1 in a synchronised gear box , **characterised in that** the control unit (12) on the basis of the speed signals and with the assistance of data stored in the memory which concern the gear change ratios of the gearbox (1) performs an analysis of the gear position situation prevailing in the gearbox (1) during a synchronising operation, and that the control unit (12) emits an output signal at the end of the synchronising operation indicating the completion of the gear change operation.

3. Arrangement comprising an electronically controlled mechanical multi-step gearbox (1), whereby a first sensor (7,8) is designed to detect the speed of the input shaft (6) to the gearbox (1) and to generate therefrom a first speed signal, and a second sensor (10,11) is designed to detect the speed of the output shaft (9) from the gearbox (1) and to generate therefrom a second speed signal, the sensors (7,8;10,11) are connected with a control unit (12) for conveying the speed signals to the control unit (12), which control unit (12) with the assistance of the speed signals which emanate from the sensors (7,8;10,11) and with the assistance of data stored in a memory which concern the gear change ratios of the various steps of the gearbox (1) is designed to perform an analysis of the gear change situation prevailing in the gearbox (1) during a gear change operation **characterised in that** that the control unit (12) is arranged to compare the speed signals and that when the ratio between them has been found to be constant for a predetermined period of time at the end of the gear change operation to emit an output signal indicating the completion of the gear change operation.

4. Arrangement according to claim 3, **characterised in that** the gear box (1) incorporates a main gearbox (2) and a split gearbox (3) and/or a range gearbox (4).

5. Arrangement according to any of claims 3-4 in which the gearbox is a synchronised gear box , **characterised in that** the control unit (12) on the basis of the speed signals and with the assistance of data stored in the memory which concern the gear change ratios of the gearbox (1) is arranged to perform an analysis of the gear position situation prevailing in the gearbox (1) during a synchronising operation, and that the control unit (12) is arranged to emit an output signal at the end of the synchronising operation indicating the completion of the gear change operation.

## Patentansprüche

1. Verfahren in einem elektronisch gesteuerten mechanischen Stufentriebe (1), bei dem die Drehzahl der Eingangswelle (6) des Getriebes (1) durch einen ersten Sensor (7, 8) festgestellt wird, um ein erstes Drehzahlsignal zu erzeugen, und die Drehzahl der Ausgangswelle (9) des Getriebes (1) von einem zweiten Sensor (10, 11) festgestellt wird, um ein zweites Drehzahlsignal zu erzeugen, wobei die Drehzahlsignale der Sensoren (7, 8; 10,11) einer Steuereinheit (12) zugeführt werden, die dazu ausgebildet ist, aufgrund dieser Drehzahlsignale und mit Hilfe von in einem Speicher gespeicherten, die Gangwechselverhältnisse des Getriebes (1) betreffenden Daten eine Analyse der im Getriebe (1) bestehenden Zahnradstellungssituation während eines Gangwechselvorgangs durchzuführen, **dadurch gekennzeichnet, dass** die Drehzahlsignale verglichen werden und, wenn festgestellt worden ist, dass das Verhältnis zwischen ihnen während einer vorbestimmten Zeitspanne am Ende des Gangwechselvorgangs konstant ist, die Steuereinheit (12) ein Ausgangssignal abgibt, welches die Vollendung des Gangwechselvorgangs anzeigt.

2. Verfahren nach Anspruch 1 in einem synchronisierten Getriebe, **dadurch gekennzeichnet, dass** die Steuereinheit (12) aufgrund der Drehzahlsignale und mit Hilfe von im Speicher gespeicherten, die Gangwechselverhältnisses des Getriebes (1) betreffenden Daten eine Analyse der im Getriebe (1) während eines Synchronisiervorgangs bestehenden Zahnradstellungssituation durchführt, und dass die Steuereinheit (12) am Ende des Synchronisiervorgangs ein Ausgangssignal abgibt, das die Vollendung des Gangwechselvorgangs anzeigt.

3. Anordnung mit einem elektronisch gesteuerten Stufengetriebe (1), bei dem ein erster Sensor (7, 8) dazu ausgebildet ist, die Drehzahl der Eingangswelle (6) des Getriebes (1) festzustellen und daraus ein erstes Drehzahlsignal zu erzeugen, und ein zweiter Sensor (10, 11) dazu ausgebildet ist, die Drehzahl der Ausgangswelle (9) des Getriebes (1) festzustellen und daraus ein zweites Drehzahlsignal zu erzeugen, wobei die Sensoren (7, 8; 10, 11) mit einer Steuereinheit (12) verbunden sind, um die Drehzahlsignale an die Steuereinheit (12) abzugeben, welche Steuereinheit (12) dazu ausgebildet ist, mit Hilfe der von den Sensoren (7, 8; 10, 11) stammenden Drehzahlsignale und mit Hilfe von in einem Speicher gespeicherten, die Gangwechselverhältnisse der verschiedenen Stufen des Getriebes (1) betreffenden Signale eine Analyse der im Getriebe (1) bestehenden Gangwechselsituation während eines Gangwechselvorgangs durchzuführen, **dadurch gekennzeichnet, dass** die Steuereinheit (12) dazu ausgebildet ist, die Drehzahlsignale zu vergleichen und, wenn festgestellt worden ist, dass das Verhältnis zwischen ihnen während einer vorbestimmten Zeitspanne am Ende des Gangwechselvorgangs konstant ist, ein Ausgangssignal abzugeben, das die Vollendung des Gangwechselvorgangs anzeigt.

4. Anordnung nach Anspruch 3, **dadurch gekennzeichnet, dass** das Getriebe (1) ein Hauptgetriebe (2) und ein Verzweigungsgetriebe (3) und/oder ein Bereichsgetriebe (4) enthält.

5. Anordnung nach einem der Ansprüche 3-4, bei dem das Getriebe ein synchronisiertes Getriebe ist, **dadurch gekennzeichnet, dass** die Steuereinheit (12) dazu ausgebildet ist, aufgrund der Drehzahlsignale und mit Hilfe von im Speicher gespeicherten, die Gangwechselverhältnisse des Getriebes (1) betreffenden Daten eine Analyse der im Getriebe (1) während eines Synchronisiervorgangs bestehenden Zahnradstellungssituation durchzuführen, und dass die Steuereinheit (12) dazu ausgebildet ist, am Ende des Synchronisiervorgangs ein Ausgangssignal abzugeben, das die Vollendung des Gangwechselvorgangs anzeigt.

## Revendications

1. Procédé dans une boîte de vitesses mécanique à plusieurs étages commandée de manière électronique, où la vitesse de l'arbre d'entrée (1) dans la boîte de vitesses (6) est détectée par un premier capteur (7, 8) pour la génération d'un premier signal de vitesse et la vitesse de l'arbre de sortie (9) de la boîte de vitesses (1) est détectée par un deuxième capteur (10, 11) pour la génération d'un deuxième signal de vitesse, lesdits signaux de vitesse provenant des capteurs (7, 8; 10, 11) sont transportés vers une unité de commande (12), qui est conçue sur la base de ces signaux de vitesse et avec l'assistance de données stockées dans une mémoire qui concernent les rapports de changement de vitesse de la boîte de vitesses (1) afin de réaliser une analyse de la situation de position de vitesse existant dans la boîte de vitesses pendant une opération de changement de vitesse, **caractérisé en ce que** les signaux de vitesse sont comparés et **en ce que**, lorsque le rapport entre eux s'est avéré être constant pendant une durée prédéterminée à la fin de l'opération de changement de vitesse, l'unité de commande (12) émet un signal de sortie indiquant la fin de l'opération de changement de vitesse.

2. Procédé selon la revendication 1 dans une boîte de vitesses synchronisée, **caractérisé en ce que** l'unité de commande (12) sur la base des signaux de vitesse et avec l'assistance de données stockées dans la mémoire qui se rapportent aux rapports de changement de vitesse de la boîte de vitesses (1) réalise une analyse de la situation de position de vitesse existant dans la boîte de vitesses (1) pendant une opération de synchronisation, et **en ce que** l'unité de commande (12) émet un signal de sortie à la fin de l'opération de synchronisation indiquant la fin de l'opération de changement de vitesse.

3. Agencement comportant une boîte de vitesses mécanique à plusieurs étages commandée de manière électronique, où un premier capteur (7, 8) est conçu pour détecter la vitesse de l'arbre d'entrée (6) dans la boîte de vitesses (1) et pour générer un premier signal de vitesse, et un deuxième capteur (10, 11 ) est conçu pour détecter la vitesse de l'arbre de sortie (9) de la boîte de vitesses (1) et pour générer un deuxième signal de vitesse, les capteurs (7, 8; 10, 11) sont reliés à une unité de commande (12) afin de transporter les signaux de vitesse vers l'unité de commande (12), laquelle unité de commande (12) avec l'assistance des signaux de vitesse qui émanent des capteurs (7, 8; 10, 11) et avec l'assistance de données stockées dans une mémoire qui concernent les rapports de changement de vitesse des différents paliers de la boîte de vitesses (1) est conçue pour réaliser une analyse de la situation de changement de vitesse qui existe dans la boîte de vitesses pendant une opération de changement de vitesse, **caractérisé en ce que** l'unité de commande (12) est prévue pour comparer les signaux de vitesse et, lorsque le rapport entre eux s'est avéré être constant pendant une durée prédéterminée à la fin de l'opération de changement de vitesse, pour émettre un signal de sortie indiquant la fin de l'opération de changement de vitesse.

4. Agencement selon la revendication 3, **caractérisé en ce que** la boîte de vitesses (1) incorpore une boîte de vitesses principale (2) et une boîte de vitesses séparée (3) et/ou une boîte de vitesses de gamme (4).

5. Agencement selon l'une quelconque des revendications 3 à 4, dans lequel la boîte de vitesses est une boîte de vitesses synchronisée, **caractérisé en ce que** l'unité de commande (12) sur la base des signaux de vitesse et avec l'assistance de données stockées dans la mémoire qui concernent les rapports de changement de vitesse de la boîte de vitesses (1) est prévue pour réaliser une analyse de la situation de position de vitesse qui existe dans la boîte de vitesses (1) pendant une opération de synchronisation, et **en ce que** l'unité de commande (12) est prévue pour émettre un signal de sortie à la fin de l'opération de synchronisation indiquant la fin de l'opération de changement de vitesse.
